# EUROPÄISCHE PATENTSCHRIFT

(11) **EP 1 598 580 B1**
(45) Veröffentlichungstag und Bekanntmachung des Hinweises auf die Patenterteilung: **29.08.2007**
(21) Anmeldenummer: 05006340.3
(22) Anmeldetag: 23.03.2005
(51) Int. Cl.: F16J 15/32

(54) **Radial-Wellendichtring**
Radial lip seal
Joint à lèvre radiale

(30) Priorität: 21.05.2004 DE 102004025003
(43) Veröffentlichungstag der Anmeldung: 23.11.2005
(73) Patentinhaber: AUDI AG, 85045 Ingolstadt (DE)
(72) Erfinder: Scholle, Tassilo, 85055 Ingolstadt (DE)
(74) Vertreter: Asch, Konrad

(56) Entgegenhaltungen:
- DE-A1- 10 310 062
- DE-B- 1 153 578
- GB-A- 710 037
- US-A- 2 446 380
- US-A- 2 606 779
- US-B1- 6 409 177

## Beschreibung

Die Erfindung betrifft einen Radial-Wellendichtring, vorzugsweise als Dichtmittel an einer Motor- bzw. Getriebewelle eines Kraftfahrzeugs, bestehend aus einem Tragelement und einem Dichtungselement, welche ringförmig ausgebildet sind, wobei das Dichtungselement am Tragelement angeordnet ist und mittels Tragelement an einem feststehenden Bauteil befestigt ist, zur Abdichtung gegenüber zwei angrenzenden fluidförmigen Medien an einer ringspaltförmigen Dichtstelle zwischen einer Welle und einem feststehenden Bauteil, wobei das Dichtelement an der Welle umfangsseitig berührend anliegt.

Im Stand der Technik zeigt die DE 199 23 530 A1 einen Radial-Wellendichtring zum Abdichten von Maschinenteilen, dessen Struktur wenigstens eine schleifende Dichtlippe aufweist, die gegen den Austritt von Schmiermitteln und gegen das Eindringen von Fremdkörpern, Staub und ähnlichen in ein Lager-bzw. Maschinengehäuse eingesetzt ist. Der bekannte Radial-Wellendichtring besteht aus einem Tragteil und einer einzelnen Dichtlippe, die schleifend an der Welle anliegt und somit eine Manschette bildet. Dieser Radial-Wellendichtring besteht aus Elastomer wie beispielsweise Silikon-Kautschuk oder aus Kunststoff, vorwiegend aus Polytetrafluorethylen (PTFE).

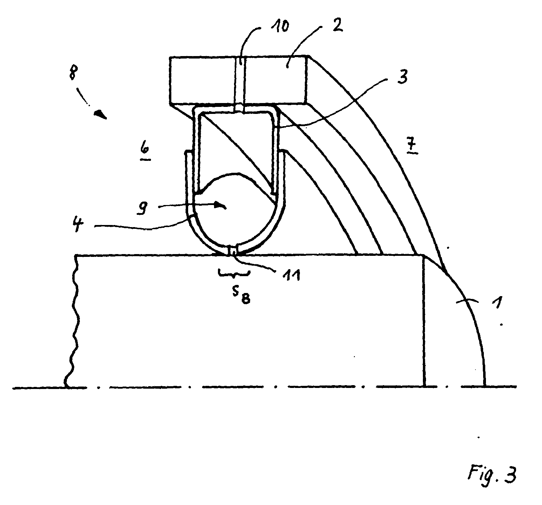

Dieser Radial-Wellendichtring (dort in Figur 3) besitzt bei der praktischen Anwendung einen metallischen Versteifungsring, der die Steifheit der Dichtlippe gewährleistet.

Nach DE 43 07 964 C2 ist es weiterhin bekannt, an der Wandung die dem dichtenden Medium zugewandt ist, in dessen Oberfläche spiralförmig verlaufende Nuten einzubringen. Diese als Rückförderelement wirkenden spiralförmigen Nuten dienen der Rückförderung des abzudichtenden Mediums in Richtung des abzudichtenden Raums.

Das schmiert im weiteren die Dichtlippe und fördert deren thermische Kühlung.

Die Förderrichtung der bekannten Förderkontur eines Radial-Wellendichtringes ist zum Ende der Dichtlippe gerichtet, welches auf der Welle aufliegt.

Diese Radial-Wellendichtringe können nur in einer Richtung abdichten, in Richtung nur eines Fluidraumes.

Die Abdichtung eines Fluidraumes gegenüber einem angrenzenden Fluidraum erfordert den erhöhten Aufwand von zwei , einzelnen Radial-Wellendichtringen, die in axialer Richtung betrachtet auf der Welle hintereinander gegensätzlich (spiegelverkehrt) angeordnet sind, mit entgegengesetzt wirkenden spiralförmigen Nuten.

Die DE 10310062 A1 zeigt eine Öldichtung zum Abdichten zwischen zwei Flüssigkeiten. Die Öldichtung hat ein ringförmiges Gehäuse, an dem zwei Dichtlippen befestigt sind, von denen die eine zum einen Flüssigkeitsraum und die andere zum anderen Flüssigkeitsraum gerichtet ist.

Die US 2446380 zeigt eine Wellendichtung mit einer an einem ringförmigen Träger angeordneten Dichtlippe, die auf der Flüssigkeitsseite einen gewindeförmigen Abschnitt hat, der die Flüssigkeit zurück fördert. Daran anschließend ist an der Dichtlippe eine Schmutzlippe und benachbart dazu ein weiterer gewindeförmiger Abschnitt mit entgegen gesetzter Steigung angeordnet. Die Schmitzlippe und der weitere gewindeförmige Abschnitt dienen dazu, das Eindringen von Schmutz zu verhindern.

Die US 6409177 B1 zeigt eine Radialwellendichtung mit einem ringförmigen Gehäuse, an dem eine U-förmige Dichtmembran angeordnet ist, die mit schräg stehenden Wellen zum zurückfördern von Flüssigkeit versehen ist.

Aufgabe der Erfindung ist es, einen Radial-Wellendichtring zum Abdichten von Maschinenteilen aufzuzeigen, der zur Trennung von zwei benachbarten Fluiden einsetzbar ist und einen deutlich geringeren Aufwand bei bekannter Zuverlässigkeit und Lebensdauer aufweist.

Die Aufgabe wird durch die Merkmale des Anspruchs 1 gelöst.

Das Dichtelement besteht aus dem Kunststoff PTFE oder einem Elastomer. Durch den U-förmigen Querschnitt wurde eine Geometrie erzielt, die eine höhere Steifigkeit des erfindungsgemäßen Dichtelements gegenüber einem bekannten Dichtelement erreicht. Damit kann bei der Erfindung der bisher bekannte metallische Versteifungsring teilweise entfallen, da der erfindungsgemäße Radial-Wellendichtring infolge der erzielten Steifigkeit selbsttragend ist.

Durch den U-förmigen Querschnitt im Zusammenhang mit dem Material PTFE bzw. Elastomer wird eine Biegespannung aufgebaut, die in annähernd symmetrischer Wirkung die Steifheit des Dichtelements erzeugt.

Im weiteren wird durch die U-förmige Gestalt des Dichtelements die Vibrationsabsorbtion verbessert.

Im weiteren ist es vorteilhaft, die den Fluidräumen zugeordneten Wandungen des Dichtelements mit einer Förderkontur auszubilden. Diese Förderkontur ist entgegen der im Stand der Technik gebräuchlichen Förderrichtung ausgebildet. Die Förderrichtung erfolgt vom an der Welle aufliegenden Scheitelbereich des Dichtelements weg. Dabei sind alle bisher gebräuchlichen Förderstrukturen möglich, vorzugsweise spiralförmige, sinusähnliche Wellen oder Drallstege.

In Abhängigkeit der Einsatzbedingungen kann es durch die gewählte Förderrichtung im Scheitelbereich zu einer Ausbildung eines Druckminderbereiches kommen. Dieser Bereich geringeren atmosphärischen Drucks erfordert eine Entlüftung, sodass wahlweise im Scheitelbereich, vorzugsweise im Scheitel selbst, mindestens ein Durchlasskanal angeordnet ist, der eine Verbindung von der Außenwandung des Dichtelements zu der innenliegenden Kammer des Dichtmittels schafft. Von dieser Kammer muss ein weiterer Auslasskanal durch das Tragelement und das feststehende Bauteil hindurch zur äußeren Atmosphäre führen. Mit dieser Maßnahme kann die Bildung eines Druckminderbereiches im Scheitelbereich vermieden werden.

Die Anwendung des erfindungsgemäßen Radial-Wellendichtrings ist nicht auf eine Welle eines Motor- bzw. Getriebegehäuses beschränkt, sondern ist grundsätzlich auch im allgemeinen Maschinenbau einsetzbar.

Nachfolgend wird die Erfindung anhand eines Ausführungsbeispiels mit Zeichnung näher erläutert. Es zeigen
- **Figur 1**: Dichtmittel in Spalt zwischen rotierender Welle und feststehendem Bauteil
- **Figur 2**: Draufsicht auf einen auszugsweisen Abschnitt eines Dichtelements mit ausgebildeter Förderkontur
- **Figur 3**: Dichtmittel mit Entlüftungskanal

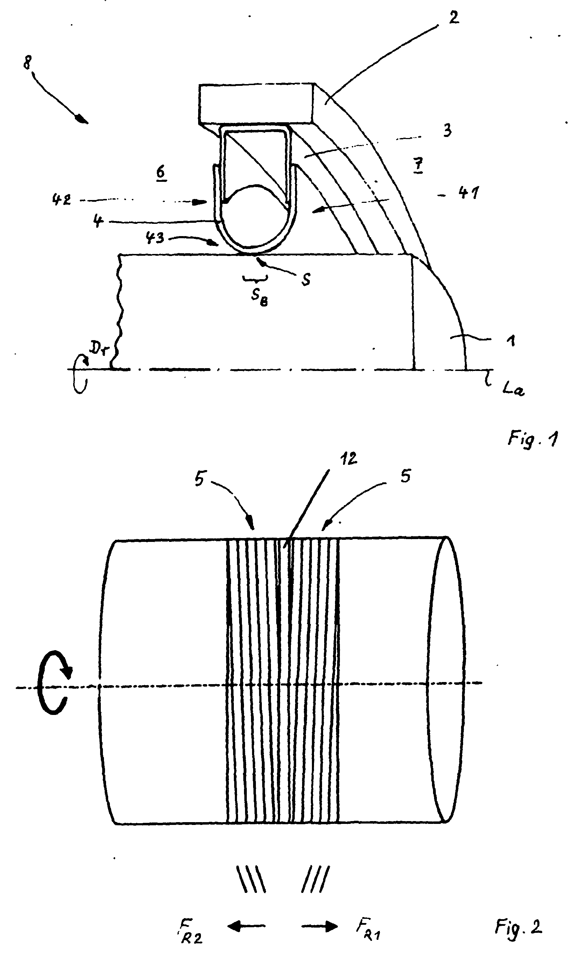

**Figur 1** zeigt schematisch ein im Spalt zwischen einer Welle 1 und einem feststehenden Bauteil 2 einer Maschine angeordnetes Dichtmittel 8. Das Dichtmittel 8 entspricht dem Radial-Wellendichtring.Eine solche Anordnung ist beispielsweise bei der Welle eines Motors (z.B. Kurbelwelle) oder eines Getriebes eines Kraftfahrzeugs anwendbar. Die Welle 1 könnte der Kurbelwelle entsprechen und das feststehende Bauteil 2 könnte ein Bauteil des Motorgehäuses sein. Die Erfindung ist jedoch auf eine Anwendung an der Kurbelwelle nicht eingeschränkt.

Das Dichtmittel 8 dichtet einen ersten Fluidraum 6 gegenüber einem anderen, zweiten Fluidraum 7 ab. Beides können Ölräume sein, wie sie im Motor- oder Getriebegehäuse zu finden sind.

Die Erfindung ist bei Ihrer Anwendung nicht auf eine Kurbelwelle bzw. Motorgehäuse beschränkt, sondern auch in der Getriebetechnik bei Kraftfahrzeugen anwendbar und im allgemeinen Maschinenbau.

Das Dichtmittel 8 besteht aus einem Tragelement 3 und einem Dichtelement 4. Das Dichtmittel 8 ist mittels Tragelement 3 am feststehenden Bauteil 2 befestigt. Die Befestigung des Tragelements 3 am feststehenden Bauteil 2 erfolgt nach bekannter und üblicher Befestigungstechnik. Das Tragelement 3 ist vorzugsweise von einem im wesentlichen, winkligen U-förmigen Querschnitt und ist als Ring mit dem Rücken der U-Form am feststehenden Bauteil 2 befestigt. Die Schenkel dieser U-Form sind vorzugsweise abgewinkelt.

An den Außenseiten der beiden Schenkel des Tragelements 3 ist das Dichtelement 4 angeordnet.

Das Dichtelement 4 ist ringförmig ausgebildet, wobei es im Querschnitt in einem U-förmigen Bogen, ähnlich dem Bild einer Krampe, ausgebildet ist. Dieser im Querschnitt als U-förmig gestaltete Ring (Dichtelement 4) liegt mit dem Scheitelbereich S_{B} seines Scheitels S entlang dem Umfang der Welle 1 dichtend an.

Das Dichtelement 4 besitzt nach **Fig. 2** auf der Seite der abzudichtenden Fluide eine Förderkontur 5, wobei die Förderkontur 5 das abzudichtende Fluid immer wieder in Richtung des abzudichtenden Fluidraumes (F_{R 1}, F_{R 2}) fördert und dabei das Dichtelement schmiert und somit zu dessen Kühlung beiträgt. Dabei kann im Scheitel S eine Umfangsnut 12 angeordnet sein.

In weiterer Ausgestaltung der Erfindung (**Fig. 3**) kann am Dichtmittel 8 eine Entlüftung vorgesehen werden, um einen Druckminderbereich im Scheitelbereich S_{B} zu vermeiden. Zu diesem Zweck kann im Scheitelbereich S_{B} mindestens ein Durchlasskanal 11 durch die Wandung des Dichtelements 4 angeordnet sein , der in die Kammer 9 mündet. Von der Kammer 9 ist im Bereich des Tragelements 3 mindestens ein Auslasskanal 10 angeordnet, der durch das feststehende Bauteil 2 führend eine Verbindung zur äußeren Atmosphäre außerhalb des Gehäuses herstellt. Mit diesen Maßnahmen wird die Ausbildung eines Druckminderbereiches im Scheitelbereichs S_{B} im wesentlichen vermieden.

## Patentansprüche

1. Radial-Wellendichtring, bestehend aus einem Tragelement und einem Dichtungselement, welche ringförmig ausgebildet sind, wobei das Dichtungselement am Tragelement angeordnet ist und mittels Tragelement an einem feststehenden Bauteil befestigbar ist, zur Abdichtung gegenüber zwei angrenzenden fluidförmigen Medien an einer ringspaltförmigen Dichtstelle (43) zwischen einer Welle (1) und dem feststehenden Bauteil (2), wobei das Dichtelement (4) einen U-förmigen Querschnitt aufweist, das Dichtelement im montierten Zustand mit dem Scheitelbereich (S_{B}) seines Scheitels (S) entlang dem Umfang der Welle (1) dichtend anliegt und eine Schenkelwandung (41, 42) des Dichtelements (4) mit einer Schenkelwandung des Tragelements (3) verbunden ist, **dadurch gekennzeichnet, dass** ausgehend vom Scheitel (S) jeweils die einem Fluidraum (6,7) zugeordnete Schenkelwandung (41,42) mit einer Förderkontur (5) versehen ist, die in Wellendrehrichtung (Dr) vom Scheitel (S) abweisend geführt ist.

2. Radial-Wellendichtring gemäß Anspruch 1, **dadurch gekennzeichnet, dass** im Scheitel (S) umfangsseitig eine Ringnut (12) ausgebildet ist.

3. Radial-Wellendichtring gemäß einem der vorhergehenden Ansprüche, **dadurch gekennzeichnet, dass** innerhalb des Radial-Wellendichtrings eine Kammer (9) ausgebildet ist und dass im Scheitelbereich (S_{B}) mindestens ein Durchlasskanal (11) angeordnet ist, der mit der Kammer (9) verbunden ist und die Kammer (9) im Bereich des Tragelements (3) mindestens einen Auslasskanal (10) angeordnet hat, der das feststehende Bauteil (2) durchstoßend eine Verbindung zur Atmosphäre besitzt.

4. Radial-Wellendichtring gemäß einem der vorhergehenden Ansprüche, **dadurch gekennzeichnet, dass** das Dichtelement (4) aus PTFE-Kunststoff oder Elastomer gebildet ist.

5. **Radial-Wellendichtring gemäß einem der vorhergehenden Ansprüche, dadurch gekennzeichnet, dass** das Dichtelement (4) aus einem Faserverbundwerkstoff gebildet ist.

## Claims

1. Radial lip seal, comprising a support element and a sealing element, which are annular, whereby the sealing element is disposed on the support element and can be attached to a fixed component by means of a support element, for giving sealing, between two adjoining fluid media, at an annular gap sealing point (43) between a shaft (1) and the fixed component (2), whereby the sealing element (4) has a U-shaped cross-sectional form and, in the mounted state, lies, with an apex area (A_{A}) of an apex (A), along the periphery of the shaft (1), giving sealing, and an arm-piece wall (41, 42) of the sealing element (4) is connected to an arm-piece surface of the support element (3), **characterized in that**, from the apex (A) outwards, an arm-piece (41, 42) associated with the given fluid space (6, 7) has a conveying edge (5) that is diverted, in the direction of rotation of the shaft (Dr) from the apex (A).

2. Radial lip seal in accordance with claim 1, **characterized in that** an annular groove (12) is developed peripherally in the apex (A).

3. Radial lip seal in accordance with one of the preceding claims, **characterized in that** a chamber (9) is formed inside the radial lip seal and **in that** there is at least one opening, in the apical area (A_{A}), that is connected to the chamber (9), and **in that** the chamber (9) has at least one outlet (10), in the area of the support element (3), that, penetrating the fixed component (2), is connected to the ambient air.

4. Radial lip seal in accordance with one of the preceding claims, **characterized in that** the sealing element (4) is made of a PTFE plastic or elastomer.

5. Radial lip seal in accordance with one of the preceding claims, **characterized in that** the sealing element (4) is made of a fibre compound material.

## Revendications

1. Bague à lèvres avec ressort radiale constituée d'un élément porteur et d'un élément d'étanchéité étant de forme annulaire, l'élément d'étanchéité étant disposé sur l'élément porteur et fixable à une pièce de construction solidaire au moyen de l'élément porteur, pour l'étanchéification par rapport à deux fluides adjacents sur une zone d'étanchéité en forme de fente annulaire (43) entre un arbre (1) et la pièce de construction solidaire (2), l'élément d'étanchéification (4) présentant une section transversale en forme de U, l'élément d'étanchéification lorsqu'il est monté avec la zone (S_{B}) d'une crête (S) reposant de manière étanche le long de la périphérie de l'arbre (1) et une paroi de branche (41, 42) de l'élément d'étanchéification (4) étant reliée à une paroi de branche de l'élément porteur (3), **caractérisée en ce que** en partant de la crête (S), la paroi de branche (41, 42) respectivement affectée à une chambre fluidique (6, 7) est pourvue d'un contour d'acheminement (5) qui est guidé dans le sens de rotation de l'arbre (Dr) distant de la crête (S).

2. Bague à lèvres avec ressort radiale selon la revendication 1, **caractérisée en ce que** sur le côté périphérique il est formé une gorge annulaire (12) dans la crête (S).

3. Bague à lèvres avec ressort radiale selon l'une des précédentes revendications, **caractérisée en ce qu'**une chambre (9) est formée à l'intérieur de la bague à lèvres avec ressort radiale et qu'au moins un canal de passage (11) est formé dans la zone de la crête (S_{B}), ledit canal étant relié à la chambre (9) et, dans le secteur de l'élément porteur (3), la chambre (9) détenant au moins un canal de sortie (10), ledit canal traversant la pièce de construction solidaire (2) possède une jonction vers l'atmosphère.

4. Bague à lèvres avec ressort radiale selon l'une des précédentes revendications, **caractérisée en ce que** l'élément d'étanchéification (4) est formé à partir d'une matière artificielle PTFE ou d'élastomère.

5. Bague à lèvres avec ressort radiale selon l'une des précédentes revendications, **caractérisée en ce que** l'élément d'étanchéification (4) est formé à partir d'un matériau composite renforcé par des fibres.
